# EUROPÄISCHE PATENTSCHRIFT

(11) **EP 4 217 650 B1**
(45) Veröffentlichungstag und Bekanntmachung des Hinweises auf die Patenterteilung: **03.04.2024**
(21) Anmeldenummer: 21743215.2
(22) Anmeldetag: 22.07.2021
(51) Int. Cl.: F21S 41/255, F21S 41/265, F21S 41/275, F21S 41/147, F21S 41/32, F21S 41/20, F21S 41/43, F21S 41/663, G02B 3/08

(54) **BELEUCHTUNGSVORRICHTUNG FÜR EINEN KRAFTFAHRZEUGSCHEINWERFER**
LIGHTING DEVICE FOR A MOTOR VEHICLE HEADLIGHT
DISPOSITIF D'ÉCLAIRAGE POUR UN PHARE DE VÉHICULE AUTOMOBILE

(30) Priorität: 23.09.2020 EP 20197840
(43) Veröffentlichungstag der Anmeldung: 02.08.2023
(73) Patentinhaber: ZKW Group GmbH, 3250 Wieselburg (AT)
(72) Erfinder: MANDL, Bernhard, 3200 Ober-Grafendorf (AT); HÖLZL, Andreas, 3250 Wieselburg (AT); STEINKELLNER, Johann, 3684 St. Oswald (AT); PARK, Sunjung, Seoul Seoul 08042 (KR)
(74) Vertreter: Patentanwaltskanzlei Matschnig & Forsthuber OG
(86) Internationale Anmeldenummer: PCT/EP2021/070589
(87) Internationale Veröffentlichungsnummer: WO 2022/063460

(56) Entgegenhaltungen:
- EP-A2- 2 682 671
- CN-A- 108 036 277
- DE-A1-102016 123 002
- JP-A- 2008 181 717
- US-A1- 2011 205 748
- US-A1- 2015 003 081
- US-A1- 2019 024 871
- US-A1- 2019 195 455

## Beschreibung

Die Erfindung betrifft eine Beleuchtungsvorrichtung für einen Kraftfahrzeugscheinwerfer, welche Beleuchtungsvorrichtung Folgendes umfasst:
- zumindest ein erstes Lichtmodul zur Erzeugung einer Lichtverteilung mit zumindest einer ersten und einer zweiten Lichtquelle, wobei die erste Lichtquelle eingerichtet ist, Licht in eine erste Abstrahlrichtung zu emittieren, und wobei die zweite Lichtquelle eingerichtet ist, Licht in eine zweite Abstrahlrichtung zu emittieren, wobei die erste und die zweite Abstrahlrichtung einen Winkel größer Null Grad zueinander einschließen,
- eine Strahlenblende, wobei die Strahlenblende eine optisch relevante Blendenkante zur Erzeugung einer Hell-Dunkel-Grenze umfasst, wobei das erste Lichtmodul an einer Oberseite der Strahlenblende angeordnet ist und in Kombination mit der optisch relevanten Blendenkante der Strahlenblende zur Erzeugung einer Lichtverteilung mitwirkt,
- eine Projektionslinse mit einer optischen Achse, welche eingerichtet ist, das von dem ersten Lichtmodul erzeugbare Licht vor der Beleuchtungsvorrichtung abzubilden, wobei die Projektionslinse als Fresnellinse ausgebildet ist, welche Fresnellinse einen Basiskörper und mehrere an dem Basiskörper angeordnete, ringförmige Stufen umfasst, welche Stufen im Wesentlichen konzentrisch zueinander angeordnet sind, wobei jede Stufe eine Hauptfläche zur Projektion der Lichtstrahlen des zumindest einen Lichtmoduls vor die Beleuchtungsvorrichtung und eine sich von dem Basiskörper bis zur Hauptfläche erstreckende Steigungsfläche aufweist, wobei die Steigungsfläche einen Steigungswinkel zur optischen Achse einschließt, und wobei die Hauptfläche und die Steigungsfläche in einer gemeinsamen Flächenschnittlinie eine Stufenkante ausbilden.

Weiters betrifft die Erfindung einen Kraftfahrzeugscheinwerfer mit zumindest einer erfindungsgemäßen Beleuchtungsvorrichtung.

Eine Fresnellinse (genauer: Fresnel'sche Stufenlinse) ist eine optische Linse, die die Konstruktion großer Linsen mit kurzer Brennweite ohne das Gewicht und das Volumen herkömmlicher Linsen ermöglicht.

Die Verringerung des Volumens geschieht bei der Fresnellinse durch eine Aufteilung in ringförmige Bereiche. In jedem dieser Bereiche wird die Dicke verringert, so dass die Linse eine Reihe ringförmiger Stufen erhält. Da Licht nur an der Hauptfläche der Linse gebrochen wird, ist der Brechungswinkel nicht von der Dicke, sondern nur vom Winkel zwischen den beiden Oberflächen einer Linse abhängig. Deshalb behält die Linse ihre optischen Eigenschaften bei, obwohl die Bildqualität durch die Stufenstruktur beeinträchtigt wird, was aber in vielen Anwendungsfällen keine Rolle spielt. Beispiele hierfür sind Beleuchtungs-Strahlengänge bei Scheinwerfern aller Art.

Jedoch kann die Steigungsfläche jeder Stufe zu einem unerwünschten Streulicht führen, was für viele Anwendungen, insbesondere im Kraftfahrzeugscheinwerferbereich, bei welchem genaue gesetzliche Rahmenbedingungen erfüllt werden müssen, zu Problemen führen kann.

Die EP 2 682 671 A2 offenbart eine Beleuchtungsvorrichtung aus dem Stand der Technik, wobei die US 2011/205748 A1, die JP 2008 181717 A und die US 2015/003081 A1 zeigen Fresnellinsen aus dem Stand der Technik.

Es ist eine Aufgabe der Erfindung eine verbesserte Beleuchtungsvorrichtung bereitzustellen.

Diese Aufgabe wird dadurch gelöst, dass der Steigungswinkel entlang des ringförmigen Umfangs einer Stufenkante kontinuierlich variiert.

Es kann vorgesehen sein, dass die erste und die zweite Lichtquelle bei einem eingebauten Zustand der Beleuchtungsvorrichtung in einem Kraftfahrzeugscheinwerfer in einer Horizontalebene angeordnet sind.

Es kann vorgesehen sein, dass die Strahlenblende eine Längsachse aufweist, wobei die Längsachse der Strahlenblende bei einem eingebauten Zustand der Beleuchtungsvorrichtung in einem Kraftfahrzeugscheinwerfer in einer Horizontalebene angeordnet ist, wobei die Strahlenblende eine optisch relevante Blendenkante zur Erzeugung einer asymmetrischen Hell-Dunkel-Grenze umfasst, wobei das erste Lichtmodul an einer Oberseite der Strahlenblende angeordnet ist und in Kombination mit der optisch relevanten Blendenkante der Strahlenblende zur Erzeugung einer Abblendlichtverteilung mitwirkt.

Es kann vorgesehen sein, dass der Steigungswinkel entlang des ringförmigen Umfangs einer Stufenkante derart kontinuierlich variiert, dass eine Änderung des Steigungswinkels einem sinusförmigen Verlauf folgt, wobei der Steigungswinkel jeder Stufe entlang einer vertikalen Achse, welche die optische Achse der Fresnellinse schneidet, ein Maximum der jeweiligen Stufe aufweist, und wobei der Steigungswinkel jeder Stufe entlang einer horizontalen Achse, welche die optische Achse der Fresnellinse schneidet, ein Minimum der jeweiligen Stufe aufweist.

Es hat sich überaschenderweise gezeigt, dass ein in vertikaler Richtung größerer Steigungswinkel als in horizontaler Richtung das Streulicht in der projizierten Lichtverteilung deutlich reduziert.

Generell beziehen sich im Weiteren die Begriffe hinsichtlich eines Ortes oder einer Orientierung, wie beispielsweise "horizontal", "vertikal", "in horizontaler Richtung", "in vertikaler Richtung", "oben", "unten", "vorne", "hinten", "darunter", "darüber" etc. auf eine ordnungsgemäße Einbaulage der gegenständlichen Beleuchtungsvorrichtung in einem Kraftfahrzeugscheinwerfer.

Es kann vorgesehen sein, dass das Maximum des Steigungswinkels der Stufen ausgehend von der optischen Achse in vertikaler Richtung zunimmt.

Es kann vorgesehen sein, dass das Minimum des Steigungswinkels der Stufen ausgehend von der optischen Achse in horizontaler Richtung zunimmt.

Es kann vorgesehen sein, dass die Beleuchtungsvorrichtung zumindest ein zweites Lichtmodul mit zumindest einer Lichtquelle zur Erzeugung einer Fernlichtverteilung umfasst.

Es kann vorgesehen sein, dass das zweite Lichtmodul an einer Unterseite der Strahlenblende angeordnet ist und zur Erzeugung einer Fernlichtverteilung mitwirkt.

Es kann vorgesehen sein, dass das Minimum des Steigungswinkels entlang der horizontalen Achse 1 bis 3 Grad ist.

Es kann vorgesehen sein, dass das Maximum des Steigungswinkels entlang der vertikalen Achse 3 bis 12 Grad, vorzugsweise 3 bis 6 Grad, insbesondere 6 Grad ist.

Die Aufgabe wird ebenso durch einen Kraftfahrzeugscheinwerfer mit zumindest einer erfindungsgemäßen Beleuchtungsvorrichtung gelöst.

Nachfolgend wird die Erfindung anhand von beispielhaften Zeichnungen näher erläutert. Hierbei zeigt
Fig. 1 eine beispielhafte Beleuchtungsvorrichtung in einem vertikalen Querschnitt, mit einem ersten und einem zweiten Lichtmodul und einer als Fresnellinse ausgebildeten Projektionslinse, wobei die Fresnellinse einen Basiskörper mit mehreren ringförmig angeordneten Stufen aufweist,
Fig. 2 die beispielhafte Beleuchtungsvorrichtung aus Fig. 1 in einem horizontalen Querschnitt,
Fig. 3 eine Detailansicht einer Stufe in einem Querschnitt, und
Fig. 4 die Stirnseite der Fresnellinse.

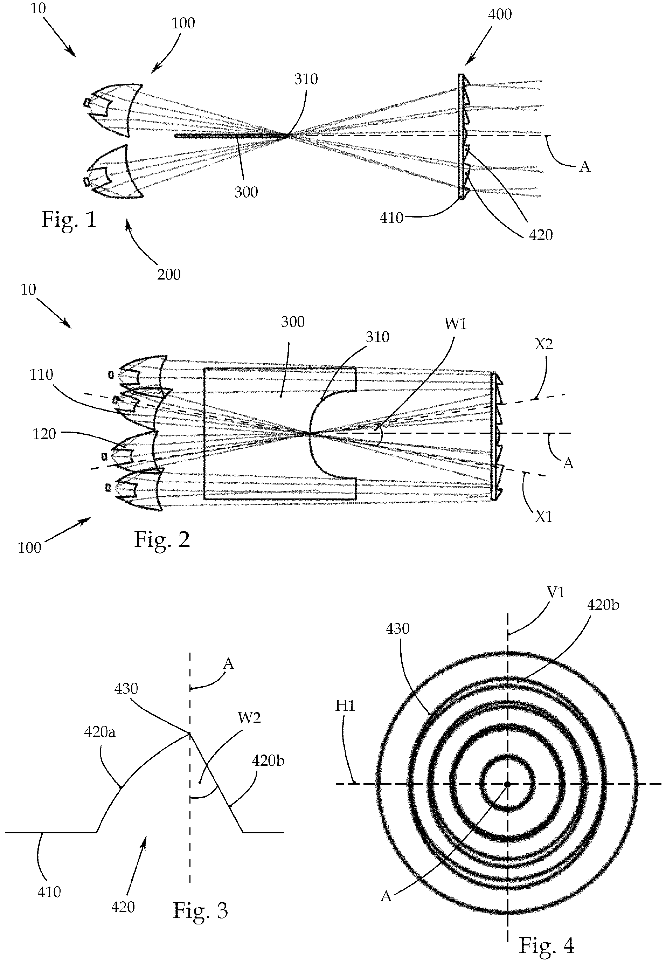

**Fig. 1** zeigt eine beispielhafte Beleuchtungsvorrichtung **10** für einen Kraftfahrzeugscheinwerfer, welche Beleuchtungsvorrichtung **10** ein erstes Lichtmodul **100** zur Erzeugung einer Abblendlichtverteilung mit zumindest einer ersten und einer zweiten Lichtquelle **110**, **120** umfasst, wobei die erste und die zweite Lichtquelle **110**, **120** bei einem eingebauten Zustand der Beleuchtungsvorrichtung **10** in einem Kraftfahrzeugscheinwerfer in einer Horizontalebene angeordnet sind, wie in **Fig. 2** zu sehen ist.

Die erste Lichtquelle **110** ist eingerichtet, Licht in eine erste Abstrahlrichtung **X1** zu emittieren, wobei die zweite Lichtquelle **120** eingerichtet ist, Licht in eine zweite Abstrahlrichtung **X2** zu emittieren, wobei die erste und die zweite Abstrahlrichtung **X1**, **X2** einen Winkel **W1** größer Null Grad zueinander einschließen, wie ebenfalls in **Fig. 2** deutlich zu sehen ist.

Ferner umfasst die Beleuchtungsvorrichtung **10** ein zweites Lichtmodul **200** mit zumindest einer Lichtquelle zur Erzeugung einer Fernlichtverteilung.

Darüber hinaus umfasst die Beleuchtungsvorrichtung eine Strahlenblende **300** mit einer Längsachse, wobei die Längsachse der Strahlenblende **300** bei einem eingebauten Zustand der Beleuchtungsvorrichtung **10** in einem Kraftfahrzeugscheinwerfer in einer Horizontalebene angeordnet ist, wobei die Strahlenblende **300** eine optisch relevante Blendenkante **310** zur Erzeugung einer asymmetrischen Hell-Dunkel-Grenze umfasst, wobei das erste Lichtmodul **100** an einer Oberseite der Strahlenblende **300** angeordnet ist und in Kombination mit der optisch relevanten Blendenkante **310** der Strahlenblende zur Erzeugung einer Abblendlichtverteilung mitwirkt.

Das zweite Lichtmodul **200** ist an einer Unterseite der Strahlenblende **300** angeordnet und ist eingerichtet zur Erzeugung einer Fernlichtverteilung mitzuwirken.

Ferner umfasst die Beleuchtungsvorrichtung **10** eine Projektionslinse **400** mit einer optischen Achse **A**, welche eingerichtet ist, das von dem ersten Lichtmodul **100** erzeugbare Licht vor der Beleuchtungsvorrichtung **10** abzubilden, wobei die Projektionslinse **400** als Fresnellinse ausgebildet ist, welche Fresnellinse einen Basiskörper **410** und mehrere an dem Basiskörper **410** angeordnete, ringförmige Stufen **420** umfasst, welche Stufen **420** im Wesentlichen konzentrisch zueinander angeordnet sind, wie unter anderem in **Fig. 4** zu sehen ist.

Jede Stufe **420** weist dabei eine Hauptfläche **420a** zur Projektion der Lichtstrahlen des zumindest einen Lichtmoduls **100** vor die Beleuchtungsvorrichtung **10** und eine sich von dem Basiskörper **410** bis zur Hauptfläche **420a** erstreckende Steigungsfläche **420b** auf, wobei die Steigungsfläche **420b** einen Steigungswinkel **W2** zur optischen Achse A einschließt, und wobei die Hauptfläche **420a** und die Steigungsfläche **420b** in einer gemeinsamen Flächenschnittlinie eine Stufenkante **430** ausbilden, wie detailliert in **Fig. 3** zu sehen ist. Die in **Fig. 3** eingezeichnete optische Achse **A** ist hierbei eine zur optischen Achse der Fresnellinse parallel Achse und soll die Bildung des Steigungswinkels **W2** verdeutlichen.

Der Steigungswinkel **W2** variiert entlang des ringförmigen Umfangs einer Stufenkante **430** derart kontinuierlich, dass eine Änderung des Steigungswinkels **W2** einem sinusförmigen Verlauf folgt, wobei der Steigungswinkel **W2** jeder Stufe entlang einer vertikalen Achse **V1**, welche die optische Achse **A** der Fresnellinse schneidet, ein Maximum der jeweiligen Stufe aufweist, und wobei der Steigungswinkel **W2** jeder Stufe entlang einer horizontalen Achse **H1**, welche die optische Achse **A** der Fresnellinse schneidet, ein Minimum der jeweiligen Stufe aufweist, wie deutlicher in **Fig. 4** zu sehen ist.

Wenn man beispielsweise startend von der horizontalen Achse **H1** dem ringförmigen Verlauf bzw. Umfang der Stufenkante **430** einer Stufe **420** entlang im Uhrzeigersinn umläuft (ausgehend von **Fig. 4**, welche eine Stirnseite der Fresnellinse zeigt), so ist der Steigungswinkel **W2** direkt an der horizontalen Achse **H1** bei einem Minimum, wobei der Steigungswinkel in weiterer Folge stetig bzw. kontinuierlich zu nimmt, bis der Steigungswinkel der entsprechenden Stufe bei der vertikalen Achse **V1** ein Maximum aufweist. Folgt man dem Umfang der Stufe weiter, so nimmt der Steigungswinkel **W2** wieder ab, bis er - wieder angelangt an der horizontalen Achse **H1** - ein weiteres Minimum aufweist. Anschließend nimmt der Steigungswinkel **W2** wieder ab, bis er - wieder angelangt an der vertikalen Achse **V1** - ein weiteres Maximum aufweist.

Ferner nimmt das Maximum des Steigungswinkels **W2** der Stufen ausgehend von der optischen Achse **A** in vertikaler Richtung zu, d.h. dass ausgehend von einer Stufe die unmittelbar nächste Stufe, welche einen größeren ringförmigen Umfang der Stufenkante aufweist, auch einen größeren maximalen Steigungswinkel **W2** aufweist. Dies setzt sich in vertikaler Richtung bzw. entlang der vertikalen Achse **V1** fort. Das Maximum des Steigungswinkels W2 entlang der vertikalen Achse kann dabei von 3 bis 10 Grad, vorzugsweise von 3 bis 6 Grad, variieren.

Weiters nimmt das Minimum des Steigungswinkels **W2** der Stufen ausgehend von der optischen Achse **A** in horizontaler Richtung zu, wobei das im vorigen Absatz gesagte vice versa für den Verlauf des Minimums in horizontaler Richtung gilt. Das Minimum des Steigungswinkels **W2** entlang der horizontalen Achse **H1** kann dabei von 1 bis 3 Grad variieren.

## Patentansprüche

1. Beleuchtungsvorrichtung (10) für einen Kraftfahrzeugscheinwerfer, welche Beleuchtungsvorrichtung (10) Folgendes umfasst:
- zumindest ein erstes Lichtmodul (100) zur Erzeugung einer Lichtverteilung mit zumindest einer ersten und einer zweiten Lichtquelle (110, 120), wobei die erste Lichtquelle (110) eingerichtet ist, Licht in eine erste Abstrahlrichtung (X1) zu emittieren, und wobei die zweite Lichtquelle (120) eingerichtet ist, Licht in eine zweite Abstrahlrichtung (X2) zu emittieren, wobei die erste und die zweite Abstrahlrichtung (X1, X2) einen Winkel (W1) größer Null Grad zueinander einschließen,
- eine Strahlenblende (300), wobei die Strahlenblende (300) eine optisch relevante Blendenkante (310) zur Erzeugung einer Hell-Dunkel-Grenze umfasst, wobei das erste Lichtmodul (100) an einer Oberseite der Strahlenblende (300) angeordnet ist und in Kombination mit der optisch relevanten Blendenkante (310) der Strahlenblende zur Erzeugung einer Lichtverteilung mitwirkt,
- eine Projektionslinse (400) mit einer optischen Achse (A), welche eingerichtet ist, das von dem ersten Lichtmodul (100) erzeugbare Licht vor der Beleuchtungsvorrichtung (10) abzubilden, wobei die Projektionslinse (400) als Fresnellinse ausgebildet ist, welche Fresnellinse einen Basiskörper (410) und mehrere an dem Basiskörper (410) angeordnete, ringförmige Stufen (420) umfasst, welche Stufen (420) im Wesentlichen konzentrisch zueinander angeordnet sind, wobei jede Stufe (420) eine Hauptfläche (420a) zur Projektion der Lichtstrahlen des zumindest einen Lichtmoduls (100) vor die Beleuchtungsvorrichtung (10) und eine sich von dem Basiskörper (410) bis zur Hauptfläche (420a) erstreckende Steigungsfläche (420b) aufweist, wobei die Steigungsfläche (420b) einen Steigungswinkel (W2) zur optischen Achse (A) einschließt, und wobei die Hauptfläche (420a) und die Steigungsfläche (420b) in einer gemeinsamen Flächenschnittlinie eine Stufenkante (430) ausbilden,
**dadurch gekennzeichnet, dass**
der Steigungswinkel (W2) entlang des ringförmigen Umfangs einer Stufenkante (430) kontinuierlich variiert.

2. Beleuchtungsvorrichtung nach Anspruch 1, **dadurch gekennzeichnet, dass** die erste und die zweite Lichtquelle (110, 120) bei einem eingebauten Zustand der Beleuchtungsvorrichtung (10) in einem Kraftfahrzeugscheinwerfer in einer Horizontalebene angeordnet sind.

3. Beleuchtungsvorrichtung nach Anspruch 1 oder 2, **dadurch gekennzeichnet, dass** die Strahlenblende eine Längsachse aufweist, wobei die Längsachse der Strahlenblende (300) bei einem eingebauten Zustand der Beleuchtungsvorrichtung (10) in einem Kraftfahrzeugscheinwerfer in einer Horizontalebene angeordnet ist, wobei die Strahlenblende (300) eine optisch relevante Blendenkante (310) zur Erzeugung einer asymmetrischen Hell-Dunkel-Grenze umfasst, wobei das erste Lichtmodul (100) an einer Oberseite der Strahlenblende (300) angeordnet ist und in Kombination mit der optisch relevanten Blendenkante (310) der Strahlenblende zur Erzeugung einer Abblendlichtverteilung mitwirkt.

4. Beleuchtungsvorrichtung nach einem der Ansprüche 1 bis 3, **dadurch gekennzeichnet, dass** der Steigungswinkel (W2) entlang des ringförmigen Umfangs einer Stufenkante (430) derart kontinuierlich variiert, dass eine Änderung des Steigungswinkels (W2) einem sinusförmigen Verlauf folgt, wobei der Steigungswinkel (W2) jeder Stufe entlang einer vertikalen Achse (V1), welche die optische Achse (A) der Fresnellinse schneidet, ein Maximum der jeweiligen Stufe aufweist, und wobei der Steigungswinkel (W2) jeder Stufe entlang einer horizontalen Achse (H1), welche die optische Achse (A) der Fresnellinse schneidet, ein Minimum der jeweiligen Stufe aufweist.

5. Beleuchtungsvorrichtung nach einem der Ansprüche 1 bis 4, **dadurch gekennzeichnet, dass** das Maximum des Steigungswinkels (W2) der Stufen ausgehend von der optischen Achse (A) in vertikaler Richtung zunimmt.

6. Beleuchtungsvorrichtung nach einem der Ansprüche 1 bis 5, **dadurch gekennzeichnet, dass** das Minimum des Steigungswinkels (W2) der Stufen ausgehend von der optischen Achse (A) in horizontaler Richtung zunimmt.

7. Beleuchtungsvorrichtung nach einem der Ansprüche 1 bis 6, **dadurch gekennzeichnet, dass** die Beleuchtungsvorrichtung (10) zumindest ein zweites Lichtmodul (200) mit zumindest einer Lichtquelle zur Erzeugung einer Fernlichtverteilung umfasst.

8. Beleuchtungsvorrichtung nach Anspruch 7, **dadurch gekennzeichnet, dass** das zweite Lichtmodul (200) an einer Unterseite der Strahlenblende (300) angeordnet ist und zur Erzeugung einer Fernlichtverteilung mitwirkt.

9. Beleuchtungsvorrichtung nach einem der Ansprüche 1 bis 8, **dadurch gekennzeichnet, dass** das Minimum des Steigungswinkels (W2) entlang der horizontalen Achse (H1) 1 bis 12 Grad ist.

10. Beleuchtungsvorrichtung nach einem der Ansprüche 1 bis 9, **dadurch gekennzeichnet, dass** das Maximum des Steigungswinkels (W2) entlang der vertikalen Achse 3 bis 12 Grad, vorzugsweise 3 bis 6 Grad, insbesondere 6 Grad ist.

11. Kraftfahrzeugscheinwerfer mit zumindest einer Beleuchtungsvorrichtung (10) gemäß einem der Ansprüche 1 bis 10.

## Claims

1. Lighting device (10) for a motor vehicle headlamp, which lighting device (10) comprises the following
- at least one first light module (100) for generating a light distribution having at least one first and one second light source (110, 120), the first light source (110) being set up to emit light in a first emission direction (X1), and the second light source (120) being set up to emit light in a second emission direction (X2), the first and the second emission directions (X1, X2) enclosing an angle (W1) greater than zero degrees with respect to one another,
- a beam diaphragm (300), wherein the beam diaphragm (300) comprises an optically relevant diaphragm edge (310) for generating a cut-off line, wherein the first light module (100) is arranged at an upper side of the beam diaphragm (300) and cooperates in combination with the optically relevant diaphragm edge (310) of the beam diaphragm for generating a light distribution,
- a projection lens (400) with an optical axis (A), which is set up to project the light which can be generated by the first light module (100) in front of the illumination device (10), the projection lens (400) being designed as a Fresnel lens, which Fresnel lens comprises a base body (410) and a plurality of annular steps (420) arranged on the base body (410), which steps (420) are arranged essentially concentrically with respect to one another, wherein each step (420) has a main surface (420a) for projecting the light beams of the at least one light module (100) in front of the illumination device (10) and a gradient surface (420b) extending from the base body (410) to the main surface (420a), wherein the gradient surface (420b) includes a gradient angle (W2) to the optical axis (A), and wherein the main surface (420a) and the gradient surface (420b) form a stepped edge (430) in a common surface intersection line,
**characterized in that**
the angle of inclination (W2) varies continuously along the annular circumference of a stepped edge (430).

2. Lighting device according to claim 1, **characterized in that** the first and second light sources (110, 120) are arranged in a horizontal plane when the lighting device (10) is installed in a motor vehicle headlight.

3. Lighting device according to claim 1 or 2, **characterized in that** the beam diaphragm has a longitudinal axis, the longitudinal axis of the beam diaphragm (300) being arranged in a horizontal plane when the lighting device (10) is installed in a motor vehicle headlamp, wherein the beam diaphragm (300) comprises an optically relevant diaphragm edge (310) for generating an asymmetrical cut-off line, wherein the first light module (100) is arranged on an upper side of the beam diaphragm (300) and cooperates in combination with the optically relevant diaphragm edge (310) of the beam diaphragm to generate a dipped beam distribution.

4. Lighting device according to one of claims 1 to 3, **characterized in that** the angle of inclination (W2) varies continuously along the annular circumference of a step edge (430) in such a way that a change in the angle of inclination (W2) follows a sinusoidal course, wherein the angle of inclination (W2) of each step varies along a vertical axis (V1), which intersects the optical axis (A) of the Fresnel lens, has a maximum of the respective step, and the angle of inclination (W2) of each step along a horizontal axis (H1), which intersects the optical axis (A) of the Fresnel lens, has a minimum of the respective step.

5. Lighting device according to one of claims 1 to 4, **characterized in that** the maximum of the pitch angle (W2) of the steps increases in the vertical direction starting from the optical axis (A).

6. Lighting device according to one of claims 1 to 5, **characterized in that** the minimum of the pitch angle (W2) of the steps increases in the horizontal direction starting from the optical axis (A).

7. Lighting device according to one of claims 1 to 6, **characterized in that** the lighting device (10) comprises at least one second light module (200) with at least one light source for generating a main beam distribution.

8. Lighting device according to claim 7, **characterized in that** the second light module (200) is arranged on an underside of the beam diaphragm (300) and contributes to the generation of a main beam distribution.

9. Lighting device according to one of claims 1 to 8, **characterized in that** the minimum of the angle of inclination (W2) along the horizontal axis (H1) is 1 to 12 degrees.

10. Lighting device according to one of claims 1 to 9, **characterized in that** the maximum of the angle of inclination (W2) along the vertical axis is 3 to 12 degrees, preferably 3 to 6 degrees, in particular 6 degrees.

11. Motor vehicle headlamp comprising at least one lighting device (10) according to any one of claims 1 to 10.

## Revendications

1. Dispositif d'éclairage (10) pour un projecteur de véhicule automobile, lequel dispositif d'éclairage (10) comprend :
- au moins un premier module d'éclairage (100) pour générer une répartition de la lumière avec au moins une première et une deuxième source de lumière (110, 120), la première source de lumière (110) étant conçue pour émettre de la lumière dans une première direction de rayonnement (X1) et la deuxième source de lumière (120) étant conçue pour émettre de la lumière dans une deuxième direction de rayonnement (X2), la première et la deuxième direction de rayonnement (X1, X2) formant entre elles un angle (W1) supérieur à zéro degré,
- un diaphragme de faisceau (300), le diaphragme de faisceau (300) comprenant un bord de diaphragme optiquement pertinent (310) pour générer une coupure de clair-obscur, le premier module de lumière (100) étant disposé sur une face supérieure du diaphragme de faisceau (300) et coopérant en combinaison avec le bord de diaphragme optiquement pertinent (310) du diaphragme de faisceau pour générer une répartition de lumière,
- une lentille de projection (400) avec un axe optique (A), qui est conçue pour reproduire la lumière pouvant être générée par le premier module de lumière (100) devant le dispositif d'éclairage (10), la lentille de projection (400) étant conçue comme une lentille de Fresnel, laquelle lentille de Fresnel comprend un corps de base (410) et plusieurs étages annulaires (420) disposés sur le corps de base (410), lesquels étages (420) sont disposés de manière sensiblement concentrique les uns par rapport aux autres, chaque gradin (420) présentant une surface principale (420a) pour la projection des rayons lumineux du au moins un module lumineux (100) devant le dispositif d'éclairage (10) et une surface inclinée (420b) s'étendant depuis le corps de base (410) jusqu'à la surface principale (420a), dans lequel la surface inclinée (420b) comprend un angle d'inclinaison (W2) par rapport à l'axe optique (A), et dans lequel la surface principale (420a) et la surface inclinée (420b) forment un bord étagé (430) dans une ligne de coupe de surface commune,
**caractérisé en ce que**
l'angle d'inclinaison (W2) varie continuellement le long de la circonférence annulaire d'un bord étagé (430).

2. Dispositif d'éclairage selon la revendication 1, **caractérisé en ce que** la première et la deuxième sources lumineuses (110, 120) sont disposées dans un plan horizontal lorsque le dispositif d'éclairage (10) est installé dans un projecteur de véhicule automobile.

3. Dispositif d'éclairage selon la revendication 1 ou 2, **caractérisé en ce que** le diaphragme de faisceau présente un axe longitudinal, l'axe longitudinal du diaphragme de faisceau (300) étant disposé dans un plan horizontal lorsque le dispositif d'éclairage (10) est monté dans un projecteur de véhicule automobile, le diaphragme de faisceau (300) comprenant un bord de diaphragme optiquement pertinent (310) pour générer une coupure clair-obscur asymétrique, le premier module d'éclairage (100) étant disposé sur une face supérieure du diaphragme de faisceau (300) et coopérant en combinaison avec le bord de diaphragme optiquement pertinent (310) du diaphragme de faisceau pour générer une répartition de la lumière de croisement.

4. Dispositif d'éclairage selon l'une quelconque des revendications 1 à 3, **caractérisé en ce que** l'angle d'inclinaison (W2) varie de manière continue le long de la périphérie annulaire d'un bord de marche (430) de telle sorte qu'une variation de l'angle d'inclinaison (W2) suit une courbe sinusoïdale, l'angle d'inclinaison (W2) de chaque marche suivant un axe vertical (V1), qui coupe l'axe optique (A) de la lentille de Fresnel, présente un maximum de l'étage respectif, et dans lequel l'angle d'inclinaison (W2) de chaque étage le long d'un axe horizontal (H1) qui coupe l'axe optique (A) de la lentille de Fresnel présente un minimum de l'étage respectif.

5. Dispositif d'éclairage selon l'une des revendications 1 à 4, **caractérisé en ce que** le maximum de l'angle d'inclinaison (W2) des marches augmente dans la direction verticale à partir de l'axe optique (A).

6. Dispositif d'éclairage selon l'une des revendications 1 à 5, **caractérisé en ce que** le minimum de l'angle d'inclinaison (W2) des marches augmente dans la direction horizontale à partir de l'axe optique (A).

7. Dispositif d'éclairage selon l'une des revendications 1 à 6, **caractérisé en ce que** le dispositif d'éclairage (10) comprend au moins un deuxième module d'éclairage (200) comprenant au moins une source lumineuse pour générer une distribution de lumière lointaine.

8. Dispositif d'éclairage selon la revendication 7, **caractérisé en ce que** le deuxième module d'éclairage (200) est disposé sur une face inférieure du diaphragme de faisceau (300) et participe à la génération d'une répartition de la lumière de loin.

9. Dispositif d'éclairage selon l'une quelconque des revendications 1 à 8, **caractérisé en ce que** le minimum de l'angle d'inclinaison (W2) le long de l'axe horizontal (H1) est de 1 à 12 degrés.

10. Dispositif d'éclairage selon l'une des revendications 1 à 9, **caractérisé en ce que** le maximum de l'angle d'inclinaison (W2) selon l'axe vertical est de 3 à 12 degrés, de préférence de 3 à 6 degrés, notamment de 6 degrés.

11. Projecteur de véhicule automobile comportant au moins un dispositif d'éclairage (10) selon l'une des revendications 1 à 10.
